# EUROPEAN PATENT SPECIFICATION

(11) **EP 3 967 670 B1**
(45) Date of publication and mention of the grant of the patent: **10.07.2024**
(21) Application number: 20806128.3
(22) Date of filing: 22.04.2020
(51) Int. Cl.: C04B 5/06, C21C 1/02, C21C 5/28, C21C 7/00, C21B 3/06, C21C 5/46

(54) **METHOD FOR MODIFYING STEELMAKING SLAG**
VERFAHREN ZUR MODIFIZIERUNG VON STAHLWERKSSCHLACKE
PROCÉDÉ DE MODIFICATION DE LAITIER D'ACIÉRIE

(30) Priority: 10.05.2019 JP 2019089603
(43) Date of publication of application: 16.03.2022
(73) Proprietor: JFE Steel Corporation, Tokyo 100-0011 (JP)
(72) Inventor: KATO, Yusuke, Tokyo 100-0011 (JP); HOSOHARA, Seiji, Tokyo 100-0011 (JP); NAKAMURA, Yoshiyuki, Tokyo 100-0011 (JP); TAKAHASHI, Katsunori, Tokyo 100-0011 (JP)
(74) Representative: Grünecker Patent- und Rechtsanwälte PartG mbB
(86) International application number: PCT/JP2020/017380
(87) International publication number: WO 2020/230561

(56) References cited:
- JP-A- 2003 183 717
- JP-A- 2007 254 889
- JP-A- 2007 254 889
- JP-A- 2008 266 035
- JP-A- 2008 266 035
- JP-A- 2016 033 103
- JP-A- 2017 020 058
- JP-A- 2017 141 148
- US-A- 3 430 940

## Description

### Technical Field

The present invention relates to a method that modifies steelmaking slag by blowing oxygen-containing gas into a molten steelmaking slag.

### Background Art

Slag is a by-product from a blast furnace, preliminary processing, a converter, and an electric furnace in iron and steel production. The by-product slag from preliminary processing, a converter, and an electric furnace is called steelmaking slag. In steelmaking processes, large amounts of lime are used as auxiliary material to remove phosphorus and silicon contained in hot metal and molten steel. Because of this process, steelmaking slag contains leftover lime that remains undissolved, and lime that has crystallized during cooling ("free CaO" or "free lime" as it is also called; hereinafter referred to as "f-CaO").

The free lime f-CaO turns into Ca(OH)₂ through hydration reaction, and undergoes an about two-fold deposition expansion. Therefore, when the slag is abundant in f-CaO, it expands and disintegrates as a result of hydration of f-CaO upon contacting water. One application of steelmaking slag is a roadbed material. However, a problem with steelmaking slag containing a large amount of f-CaO is swelling of roadbed due to hydration expansion of f-CaO. Against such a drawback, the following processes (1) and (2) are available that are used to reduce the swelling-causing f-CaO contained in steelmaking slag.

### (1) Aging

Aging is a process whereby f-CaO contained in slag is converted into Ca(OH)₂ to stabilize through hydration reaction. The aging process includes atmospheric aging, in which slag is kept in a pile in the open air, and vapor aging, in which the hydration reaction is accelerated with the use of water vapor.

### (2) Modification

Modification is a process that modifies slag by optionally adding a SiO₂- or Al₂O₃-containing modifier, in addition to blowing oxygen-containing gas into molten slag, as described in PTL 1. With this process, f-CaO can be modified to a stable mineral phase that does not undergo hydration expansion.

### Citation List

### Patent Literature

PTL 1: JP-A-2004-331449

JP 2008 266035 describes a method for modifying steelmaking slag by blowing oxygen-containing gas into a molten steelmaking slag, the method comprising blowing the oxygen-containing gas into a steelmaking slag to be modified having an internal temperature of larger than 1,450°C.

### Summary of Invention

### Technical Problem

In aging process (1), the atmospheric aging takes a long time (several months) before f-CaO stabilizes in the slag. Vapor aging uses a large quantity of water vapor, and involves increased processing costs, though the processing time is shorter than that in atmospheric aging. Because these aging processes take place at low temperatures, it is difficult to completely remove f-CaO. Modification in process (2) enables reduction of f-CaO in the slag. However, the metal lance or calorizing lance used in this process quickly burn out when immersed in a molten slag of 1,450°C or more to blow oxygen-containing gas. Such damage to the lance adds to the processing cost. The present invention was made in light of related art such as above, and an object of the present invention is to provide a method of modification of steelmaking slag whereby wearing of a lance during modification can be reduced while ensuring expansion stability for the steelmaking slag undergoing a modification process.

### Solution to Problem

The present invention can solve these issues with the features below.
(1) A method for modifying steelmaking slag by blowing oxygen-containing gas into a molten steelmaking slag,
   the method including dipping a lance provided as a metal pipe around which is installed a refractory having a thickness of 5 mm or more and blowing the oxygen-containing gas into a steelmaking slag to be modified having an internal temperature of 1,450°C or more,
   wherein the oxygen-containing gas has an oxygen concentration of 20 volume% or more, and is blown at a linear velocity of 30 m/sec or more as measured at a tip portion of the lance.

### Advantageous Effects of Invention

A steelmaking slag modification method of the present invention can be used to reduce wear in a lance. This makes it possible to inhibit increase of modification cost of steelmaking slag.

### Brief Description of Drawings

FIG. 1 is a cross sectional view schematically representing an example of a steelmaking slag modification apparatus 10 that can be used to implement a steelmaking slag modification method according to an embodiment of the present invention.
FIG. 2 is a cross sectional view schematically representing an example of a steelmaking slag modification apparatus 10 that can be used to implement a steelmaking slag modification method according to an embodiment of the present invention.
FIG. 3 is a cross sectional view schematically representing an example of a steelmaking slag modification apparatus 30 that can be used to implement a steelmaking slag modification method according to an embodiment of the present invention.

### Description of Embodiments

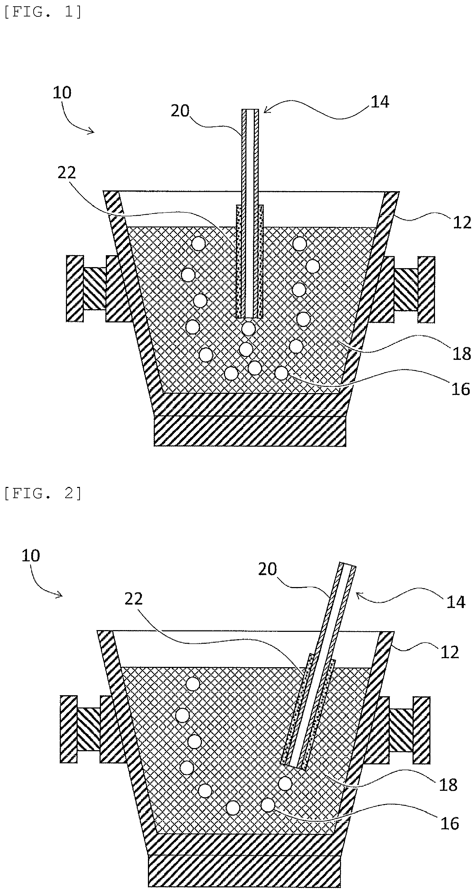

The present invention is described below through an embodiment of the present invention. FIG. 1 is a cross sectional view schematically representing an example of a steelmaking slag modification apparatus 10 that can be used to implement a steelmaking slag modification method according to the present embodiment. The steelmaking slag modification apparatus 10 includes a slag pot 12 and a lance 14. The slag pot 12 stores and maintains steelmaking slag in a molten state (hereinafter, referred to as "molten slag 18"). Here, molten slag 18 means a steelmaking slag that comprises at least 70% liquid phase. Examples of the steelmaking slag include a dephosphorization slag as a by-product of a dephosphorization process, a decarburization slag as a by-product of a decarburization process, a preliminary process slag as a by-product of a preliminary process, and an electric furnace slag as a by-product of an electric furnace refining process.

A predetermined amount of oxygen-containing gas 16 is blown into the molten slag 18 through the lance 14 dipped in the molten slag 18 from above. The oxygen-containing gas 16 blown into the molten slag 18 modifies the slag into a steelmaking slag having expansion stability. In the present embodiment, oxygen-containing gas 16 refers to a gas having an oxygen concentration of 20 volume% or more, for example, air.

The oxygen-containing gas 16 preferably has a high oxygen concentration. With an oxygen-containing gas 16 having a high oxygen concentration, the steelmaking slag can retain high temperatures. When using an oxygen-containing gas 16 having an oxygen concentration of 30 volume% or more, it is preferable that the gasket and grease used for the pipe that supplies oxygen-containing gas 16 meet specifications that are oxygen compliant, and that, with the gauge pressure set to less than 1 MPa, the oxygen pipe be installed with a device that prevents backfire with an extinguisher.

Modification of steelmaking slag proceeds through two reactions. A first reaction is a reaction in which Fe and FeO contained in steelmaking slag are oxidized into Fe₂O₃ with the oxygen contained in the oxygen-containing gas 16 blown into the slag. In a second reaction, f-CaO contained in steelmaking slag reacts with the Fe₂O₃ produced in the first reaction, and generates a stable compound 2CaO·Fe₂O₃. By blowing oxygen-containing gas 16 into the molten slag 18, and converting the f-CaO in the steelmaking slag into 2CaO·Fe₂O₃ through these reactions, the slag can be modified to a steelmaking slag having expansion stability. The steelmaking slag modification method according to the present embodiment can be implemented in this fashion.

SiO₂ sources and Al₂O₃ sources, such as silica and coal ash, may be added in blowing oxygen into steelmaking slag. However, a temperature drops in steelmaking slag due to addition of SiO₂ sources and Al₂O₃ sources slows the rate of the reaction that produces 2CaO·Fe₂O₃ from f-CaO and Fe₂O₃. It is accordingly preferable that SiO₂ sources and Al₂O₃ sources be added in a total amount of no greater than 70 kg, more preferably no greater than 35 kg, per ton of steelmaking slag. It is even more preferable not to add SiO₂ sources and Al₂O₃ sources. The SiO₂ sources and Al₂O₃ sources may be metal silicon and metal aluminum. While these materials can reduce a temperature drop in steelmaking slag, it is preferable from a cost point of view that these be added in a total amount of no greater than 7 kg per ton of steelmaking slag. It is even more preferable not to add these materials.

After blowing a predetermined amount of oxygen-containing gas 16, the lance 14 is pulled out of the molten slag 18, and the molten slag 18, finished with modification, is discharged from the slag pot 12 by tipping the slag pot 12. After discharge, the molten slag 18 is cooled by atmospheric air, pulverized, and sieved into granular materials of different sizes to be used as raw materials of roadbed.

Preferably, the slag pot 12 that stores the molten slag 18 has a diameter-to-depth ratio of 1:0.25 to 1:4. A diameter-to-depth ratio either above or below this range is not preferable because it increases the specific surface area and heat loss, aside from being uneconomical with increased amounts of material needed to construct the slag pot 12.

The lance 14 comprises a carbon steel pipe 20, and a refractory 22, at least 5-mm thick, installed around the pipe 20. The refractory 22 is installed at least around the pipe 20 to be dipped in the molten slag 18. With the refractory 22 having a thickness of at least 5 mm installed around the pipe 20 made of metal, the pipe 20 does not experience a temperature increase upon being immersed in the molten slag 18, and can be prevented from burning out. The lance 14 has the carbon steel pipe 20 on the inner side thereof. With the pipe 20 made of metal, the lance 14 can have improved strength over a lance made solely of refractory, and can be prevented from breaking.

The refractory 22 requires a thickness of at least 5 mm on installation. To reduce erosion, the refractory comprises aggregates of a size at least 1 mm. When the refractory thickness is less than 5 mm, the aggregates become unevenly distributed and local erosion causes severe wear in portions of the pipe. With a lance installed with a 5 mm-thick refractory and the oxygen-containing gas 16 blown into the molten slag 18 at a linear velocity of 30 m/sec or more, the pipe 20 can have a maintained temperature of 800°C or less under the cooling provided by the oxygen-containing gas 16 and the heat-transfer resistance provided by the refractory 22. By blowing the oxygen-containing gas 16 into the molten slag 18 at a linear velocity of 30 m/sec or faster, the reaction that Fe and FeO contained in the steelmaking slag are oxidized into Fe₂O₃ (the reaction is exothermic) occurs also in places away from the tip of the lance. This decreases the percentage of the reaction taking place near the tip of the lance, and the lance can have a reduced temperature at the tip. The refractory 22 may have a thickness of 100 mm or less on installation.

The pipe 20 has been described as being made of carbon steel. However, the material of pipe 20 is not limited to this. Instead of the carbon steel pipe 20, it is also possible to use a pipe made of a stainless steel-base heat-resistant steel, or a pipe made of a Ni-base heat-resistant alloy. In this way, bending damage does not occur even when a long injection time is required for oxygen-containing gas 16 to modify an increased amount of molten slag 18, or when the temperature of molten slag 18 is exceeding 1,600°C.

FIG. 1 represents an example in which the pipe 20 is a single pipe. However, the pipe 20 may be a double pipe. By blowing oxygen-containing gas 16 at a faster linear velocity on the outer side than on the inner side of such a pipe 20, an increase in the linear velocity of the gas after injection into the molten slag 18 can be reduced, and the temperature of pipe 20 can be reduced without causing scattering of the molten slag. Additionally, in order to reduce oxidative wear, the oxygen-containing gas blown on the outer side of the double pipe may have a lower oxygen concentration than the oxygen-containing gas blown on the inner side.

Preferably, the refractory 22 installed around the pipe 20 is carbon free. Containing carbon is not preferable because oxidation of carbon decreases the durability of refractory 22. It is also preferable to use a refractory that does not contain a crystal phase represented by MgO, that is, a refractory containing a spinel-MgO but no non-spinel MgO i.e., MgO that does not have a spinel form. Non-spinel MgO is not preferable because it expands by undergoing hydration reaction, and promotes hydration expansion of steelmaking slag when MgO contained in the refractory breaks away from the refractory into the molten slag 18. On the other hand, spinel-MgO does not only undergo hydration expansion, but also has desirable fire resistance because of its high melting point. It is accordingly preferable that the refractory 22 contain at least 0.5 mass% of spinel-MgO in terms of magnesium.

Because the theoretical composition of spinel contains 17.0 mass% of magnesium, the Mg content in refractory 22 is 17.0 mass or less when the refractory is containing spinel-MgO. That is, the refractory 22 has a Mg content of preferably 0.5 mass% to 17.0 mass%.

Preferably, the oxygen-containing gas 16 has a linear velocity of 30 m/sec to 120 m/sec at the tip of lance 14. With the oxygen-containing gas 16 having a linear velocity of 30 m/sec to 120 m/sec at the tip of lance 14, the pipe 20, made of inexpensive carbon steel, can be used without bending damage, even when the molten slag 18 is in large amounts and the oxygen-containing gas 16 is blown for 15 minutes or longer, or when the temperature of molten slag 18 is exceeding 1,600°C. The linear velocity of oxygen-containing gas 16 can be adjusted by varying the inside diameter of lance 14 or the number of lances 14.

When the oxygen-containing gas 16 has a linear velocity of less than 30 m/sec at the tip of lance 14, the molten slag 18 and oxygen react at a position closer to the lance 14, and the modification efficiency of steelmaking slag decreases. An oxygen-containing gas 16 having a linear velocity of less than 30 m/sec is also not preferable because it causes a temperature increase near the lance 14 due to oxidation reaction, and creates a possibility of severe wear in the lance 14.

When the oxygen-containing gas 16 has a linear velocity faster than 120 m/sec at the tip of lance 14, the oxygen-containing gas 16 travels a longer distance without reacting in the molten slag 18. This is not preferable as it decreases the modification efficiency of steelmaking slag. An oxygen-containing gas 16 having a linear velocity faster than 120 m/sec is also not preferable because it necessitates use of a larger slag pot 12 to prevent the oxygen-containing gas 16 from directly impinging upon and damaging the slag pot 12. A linear velocity faster than 120 m/sec of an oxygen-containing gas 16 is also not preferable because larger amount of scattering of molten slag 18 is caused.

The temperature inside the molten slag 18 before modification by injection of oxygen-containing gas 16 needs to be at least 1,450°C. The molten slag 18 can more easily flow when it has an internal temperature of 1,450°C or more, and it enables the oxygen-containing gas 16 to stir the molten slag 18 upon injection, and more effectively advances the modification reaction of molten slag 18. When the temperature inside the molten slag 18 before modification is below 1,450°C, the fluidity of molten slag 18 decreases, and the modification reaction of steelmaking slag cannot effectively proceed. The internal temperature of molten slag 18 is preferably 1,650°C or less. An internal temperature of more than 1,650°C is not preferable because a molten slag 18 having such an internal temperature causes severe wear in the lance 14. The internal temperature of molten slag 18 can be adjusted by adjusting the injection amount of oxygen-containing gas 16. The internal temperature of molten slag 18 is measured by dipping a thermometer, such as a thermocouple, into the molten slag 18 to a depth of at least 100 mm from surface. When the molten slag 18 is flowing and the surface refreshed, the difference between surface temperature and internal temperature is small, and the surface temperature of molten slag 18 may be measured as internal temperature with the use of a non-contact thermometer such as an infrared thermometer. When using an infrared thermometer, the infrared thermometer may be used with other thermometer such as a thermocouple to take a temperature measurement in advance, and the emissivity may be set to match the temperature reading, which is dependent on the emissivity of molten slag 18.

FIG. 2 is a cross sectional view schematically representing an example of a steelmaking slag modification apparatus 10 that can be used to implement a steelmaking slag modification method according to the present embodiment. As shown in FIG. 2, the oxygen-containing gas 16 may be blown through a lance 14 vertically tilted to improve the stirring efficiency of molten slag 18 and the durability of lance 14.

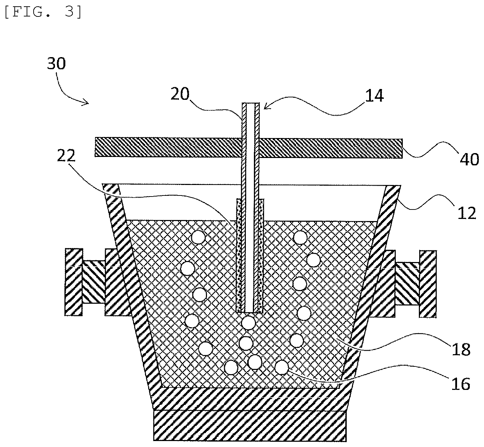

FIG. 3 is a cross sectional view schematically representing an example of a steelmaking slag modification apparatus 30 that can be used to implement a steelmaking slag modification method according to the present embodiment. In the example represented in FIG. 3, elements common to FIG. 1 are given the same reference numerals, and explanations thereof are omitted. As shown in FIG. 3, a lid-like heat-insulating anti-scattering plate 40 may be provided above the slag pot 12. In this way, scattering of slag around the slag pot 12 can be reduced. The heat-insulating anti-scattering plate 40 also has the effect to reduce thermal radiation from the top surface of molten slag 18, and inhibit a temperature drop of molten slag.

### Examples

In the Examples described below, oxygen-containing gas was blown to modify steelmaking slag using the following procedures. An about 10 tons of molten slag was discharged into a slag pot from a converter, and the slag pot was moved to a lance position. Three to five lances having an inside diameter of 21.6 to 67.9 mm were dipped in the molten slag, and an about 30 volume% of oxygen-containing gas was flown at a predetermined flow rate to modify the steelmaking slag. Here, the lances are carbon steel pipes provided with a refractory of a predetermined thickness around each pipe. The refractory had a composition with Al₂O₃: 95.3 mass%, MgO: 0.5 mass%, CaO: 0.3 mass%, SiO₂: 3.4 mass%, and incidental impurities.

The steelmaking slag was modified by varying the oxygen concentration, flow rate, injection time, and linear velocity of oxygen-containing gas. The thickness of refractory was also varied. After the injection of oxygen-containing gas, the lances were lifted, and the gas flow rate was brought to 0. The slag pot was then moved to a tipping position, and tipped to discharge the molten slag. The molten slag was cooled in the atmosphere.

The length of each lance was measured after the modification process, and the amount of wear was calculated from the length of lance before modification. The wear rate of lance was then calculated from the calculated amount of wear and the injection time. When a part of lance was missing because of burn-out or erosion, the portion with the most wear was regarded as the tip of lance for the evaluation of lance length after modification, specifically, the gas-ejecting portion of the lance dipped in the molten slag. The modification conditions and the results for Present Examples and Comparative Example are presented in the Table 1 below.

### Examples 1-4 and Comparative Examples 5 (marked as "present example 5") and 1

**[Table 1]**

| | Oxygen concentration | Inside diameter of lance | Flow rate | Injection time | Linear velocity | Temp. of molten slag | Refractory thickness | Number of lances | Wear rate of lance | Expansion stability |
|---|---|---|---|---|---|---|---|---|---|---|
| | (volume%) | (mm) | (Nm³/min) | (min) | (m/sec) | (°C) | (mm) | | (mm/min) | |
| Present Example 1 | 50 | 27.6 | 5.4 | 37 | 30 | 1450 - 1580 | 15 | 5 | 6 | Desirable |
| Present Example 2 | 50 | 27.6 | 7.2 | 28 | 40 | 1450 - 1580 | 10 | 5 | 8 | Desirable |
| Present Example 3 | 20 | 35.7 | 15.0 | 33 | 50 | 1450 - 1580 | 5 | 5 | 3 | Desirable |
| Present Example 4 | 100 | 21.6 | 4.0 | 26 | 60 | 1450 - 1580 | 10 | 3 | 2 | Desirable |
| Present Example 5 | 30 | 67.9 | 21.7 | 15 | 25 | 1450 - 1580 | 10 | 4 | 21 | Desirable |
| Comparative Example 1 | 20 | 67.9 | 21.7 | 23 | 20 | 1450 - 1580 | 0 | 5 | 32 | Desirable |

As shown in Table 1, the steelmaking slags after modification had desirable expansion stability in all of Present Examples 1 to 5 and in Comparative Example 1. The wear rate of lance was slow in Present Examples 1 to 5 in which the refractory had a thickness of 5 mm or more on installation, compared to Comparative Example 1 in which the refractory thickness was 0 mm. These results confirmed that wear in the lance can be reduced when the refractory has a thickness of 5 mm or more on installation. By reducing wear, the lance can have improved durability, and needs to be replaced less often. This makes it possible to reduce increase of modification cost of steelmaking slag.

In Present Examples 1 to 4 in which the oxygen-containing gas had a linear velocity of 30 m/sec or more at the tip of lance, the lances had slower wear rates than the lances of Comparative

Example 5 in which the linear velocity of oxygen-containing gas at the tip of lance was 25 m/sec. The result confirmed that a further reduction of lance wear can be achieved when the oxygen-containing gas has a linear velocity of 30 m/sec or more at the tip of lance. By further reducing wear, the lance needs to be replaced even less frequently, and this makes it possible to further reduce increase of modification cost of steelmaking slag.

### Reference Signs List

- 10: Steelmaking slag modification apparatus
- 12: Slag pot
- 14: Lance
- 16: Oxygen-containing gas
- 18: Molten slag
- 20: Pipe
- 22: Refractory
- 30: Steelmaking slag modification apparatus
- 40: Heat-insulating anti-scattering plate

## Claims

1. A method for modifying steelmaking slag by blowing oxygen-containing gas into a molten steelmaking slag,
the method comprising dipping a lance provided as a metal pipe around which is installed a refractory having a thickness of 5 mm or more and blowing the oxygen-containing gas into a steelmaking slag to be modified having an internal temperature of 1,450°C or more,
wherein the oxygen-containing gas has an oxygen concentration of 20 volume% or more, and is blown at a linear velocity of 30 m/sec or more as measured at a tip portion of the lance.

2. The steelmaking slag modification method according to claim 1, wherein the refractory is carbon free, and contains 0.5 mass% to 17.0 mass% of magnesium but no crystal phase represented by MgO.

## Patentansprüche

1. Verfahren zum Modifizieren von Stahlwerksschlacke durch Einblasen von sauerstoffhaltigem Gas in eine geschmolzene Stahlwerksschlacke,
wobei das Verfahren das Eintauchen einer als Metallrohr ausgebildeten Lanze, um die herum ein feuerfestes Material mit einer Dicke von 5 mm oder mehr installiert ist, und das Einblasen des sauerstoffhaltigen Gases in eine zu modifizierende Stahlwerksschlacke mit einer Innentemperatur von 1.450°C oder mehr umfasst,
wobei das sauerstoffhaltige Gas eine Sauerstoffkonzentration von 20 Volumenprozent oder mehr aufweist und mit einer linearen Geschwindigkeit von 30 m/sec oder mehr, gemessen an einem Spitzenabschnitt der Lanze, geblasen wird.

2. Verfahren zur Modifizierung von Stahlwerksschlacke nach Anspruch 1, wobei das feuerfeste Material kohlenstofffrei ist und 0,5 bis 17,0 Masse-% Magnesium, aber keine durch MgO dargestellte Kristallphase enthält.

## Revendications

1. Procédé de modification de laitier d'aciérie par soufflage d'un gaz contenant de l'oxygène dans un laitier d'aciérie fondu,
le procédé comprenant l'immersion d'une lance fournie sous la forme d'un tuyau métallique autour duquel est disposé un matériau réfractaire ayant une épaisseur de 5 mm ou plus et le soufflage du gaz contenant de l'oxygène dans un laitier d'aciérie fondu à modifier ayant une température interne de 1450 °C ou plus,
dans lequel le gaz contenant de l'oxygène a une concentration d'oxygène de 20 % en volume ou plus, et est soufflé à une vitesse linéaire de 30 m/s ou plus telle que mesurée au niveau d'une partie de bout de la lance.

2. Procédé de modification de laitier d'aciérie selon la revendication 1, dans lequel le matériau réfractaire est exempt de carbone, et contient 0,5 % en masse à 17,0 % en masse de magnésium mais ne contient pas de phase cristalline représentée par MgO.
